Europäisches Patentamt

European Patent Office

Office européen des brevets

(11) Veröffentlichungsnummer: **0 374 560**
**A2**

## (12) EUROPÄISCHE PATENTANMELDUNG

(21) Anmeldenummer: 89122293.7

(22) Anmeldetag: 02.12.89

(51) Int. Cl.5 **F16C 25/08**

(30) Priorität: 19.12.88 DE 3842717

(43) Veröffentlichungstag der Anmeldung:
27.06.90 Patentblatt 90/26

(84) Benannte Vertragsstaaten:
**DE ES FR GB IT**

(71) Anmelder: **INA Wälzlager Schaeffler KG
Industriestrasse 1-3 Postfach 1220
D-8522 Herzogenaurach(DE)**

(72) Erfinder: **Steinberger, Wolfgang, Dipl.-Ing.(FH)
Von-Hauck-Strasse 30
D-8522 Herzogenaurach(DE)**

(74) Vertreter: **Klug, Horst, Dipl.-Ing. (FH)
c/o INA Wälzlager Schaeffler KG Postfach 12
20
D-8522 Herzogenaurach(DE)**

(54) **Lagerung einer Welle in einem Rollenlager.**

(57) Bei einer Lagerung einer Welle in einem Rollenlager und einem wenigstens einseitig Axialkräfte aufnehmenden Gegenlager, wobei das Rollenlager Rollen mit planen Stirnflächen aufweist, die an Borden
eines Außenlaufringes und eines inneren Laufbahnteils anlaufen, wobei die Borde am einen Ende des
Außenlaufringes und am anderen Ende am inneren
Laufbahnteil angeordnet sind und im Gegenlager
diesen Borden entgegengerichtete Anlaufflächen
vorgesehen sind, ist zur Vereinfachung der Spieleinstellung ein Bord (8, 17) des Rollenlagers (2) gegenüber dem Außenlaufring (7, 15) oder dem inneren
Laufbahnteil (1) zu den Rollen (4) hin axial verschieblich gelagert und weist eine vom Lageräußeren her zugängliche Angriffsfläche (12, 21) für ein
Stellglied (13, 22) auf.

FIG.1

## Lagerung einer Welle in einem Rollenlager

Die Erfindung betrifft die Lagerung einer Welle in einem Rollenlager und einem wenigstens einseitig Axialkräfte aufnehmenden Gegenlager, wobei das Rollenlager Rollen mit planen Stirnflächen aufweist, die an Borden eines Außenlaufringes und eines inneren Laufbahnteils anlaufen, wobei die Borde am einen Ende des Außenlaufringes und am anderen Ende am inneren Laufbahnteil angeordnet sind und im Gegenlager diesen Borden entgegengerichtete Anlaufflächen vorgesehen sind.

Weiterhin betrifft die Erfindung die Lagerung einer Welle in einem Kegelrollenlager und einem wenigstens einseitig Axialkräfte aufnehmenden Gegenlager, wobei das Kegelrollenlager aus einem Außenlaufring und einem Innenlaufring mit zwischen diesen angeordneten Kegelrollen besteht und wobei mindestens einer der Laufringe an seinem dem größeren Rollendurchmesser zugeordneten Ende einen Bord aufweist und im Gegenlager diesem Bord entgegengerichtete Anlaufflächen vorgesehen sind, während die beiden Laufringe an ihren dem kleineren Rollendurchmesser zugeordneten Enden bordlos ausgeführt sind.

Bei der Lagerung einer Welle in zwei Rollenlagern ist es häufig erforderlich, daß das Axial- bzw. Radialspiel beider Lager möglichst gleich groß ist. Besondere Schwierigkeiten bereitet dies dann, wenn der oder die Laufringe fest mit den Umgebungsbauteilen verbunden sind, so daß eine Axialzustellung zwischen Außen- und Innenlaufring bzw. innerem Laufbahnteil nicht mehr möglich ist.

In solchen Fällen konnte die Spieleinstellung bisher nur durch Ausmessen oder durch Verwendung von Abstimmscheiben bewerkstelligt werden, was nicht nur umständlich, sondern auch zeitraubend ist.

Der Erfindung liegt die Aufgabe zugrunde, die Spieleinstellung bei zwei einer Lagerung zugeordneten Rollenlagern mit einfachen Mitteln und einer erheblichen Zeitersparnis zu ermöglichen.

Diese Aufgabe wird dadurch gelöst, daß ein Bord des Rollenlagers gegenüber dem Außenlaufring oder dem inneren Laufbahnteil zu den Rollen hin axial verschieblich gelagert ist und eine vom Lageräußeren her zugängliche Angriffsfläche für ein Stellglied aufweist.

Eine andere Lösung sieht hierzu vor, daß ein Bord des Kegelrollenlagers gegenüber seinem Laufring zu den Kegelrollen hin axial verschieblich gelagert ist und eine vom Lageräußeren her zugängliche Angriffsfläche für ein Stellglied aufweist.

Durch die vorgeschlagenen Maßnahmen ist es sowohl bei Rollen- als auch bei Kegelrollenlagern möglich, ein im wesentlichen gleich großes Spiel bei zwei einer Lagerung zugeordneten Lagern schnell und problemlos einzustellen.

Im Rahmen der Erfindung ist es nicht ausgeschlossen, daß der den axial verschieblich gelagerten Bord aufweisende Laufring bzw. das Laufbahnteil aus Halterungsgründen oder zur Bildung einer Baueinheit an der dem verschieblichen Bord gegenüberliegenden Seite ebenfalls mit einem Bord versehen ist, solange dieser nicht als Anlauffläche dient und von den Rollenstirnflächen freigestellt ist.

In weiterer Ausgestaltung der Erfindung ist vorgesehen, daß an dem axial verschieblich gelagerten Bord ein Stellglied angreift, das sich andererseits an dem zugehörigen Bauteil (Außenlaufring oder inneres Laufbahnteil bzw. Innenlaufring) abstützt. Eine solche Ausbildung gestattet es in einfacher Weise, den verschieblich gelagerten Bord nach der Spieleinstellung sicher ortsfest zu fixieren.

Nach der Erfindung ist hierzu vorgesehen, daß das Stellglied von einem Federelement, vorzugsweise einer Tellerfeder gebildet ist. Dabei kann durch die Wahl der Federvorspannung sowohl die Spieleinstellung als auch die Fixierung des verschieblichen Bordes zuverlässig erfolgen.

Es ist auch möglich, daß das Stellglied als Schraube ausgebildet ist, die mit einem Außengewinde in ein Innengewinde des Außenlaufringes eingreift.

Ausführungsbeispiele der Erfindung sind in der Zeichnung dargestellt und werden nachfolgend näher beschrieben. Es zeigen:

Figur 1 eine erfindungsgemäße Rollenlagerung im Längsschnitt,

Figur 2 eine andere Ausführungsform im Längsschnitt und

Figur 3 eine erfindungsgemäße Kegelrollenlagerung im Längsschnitt.

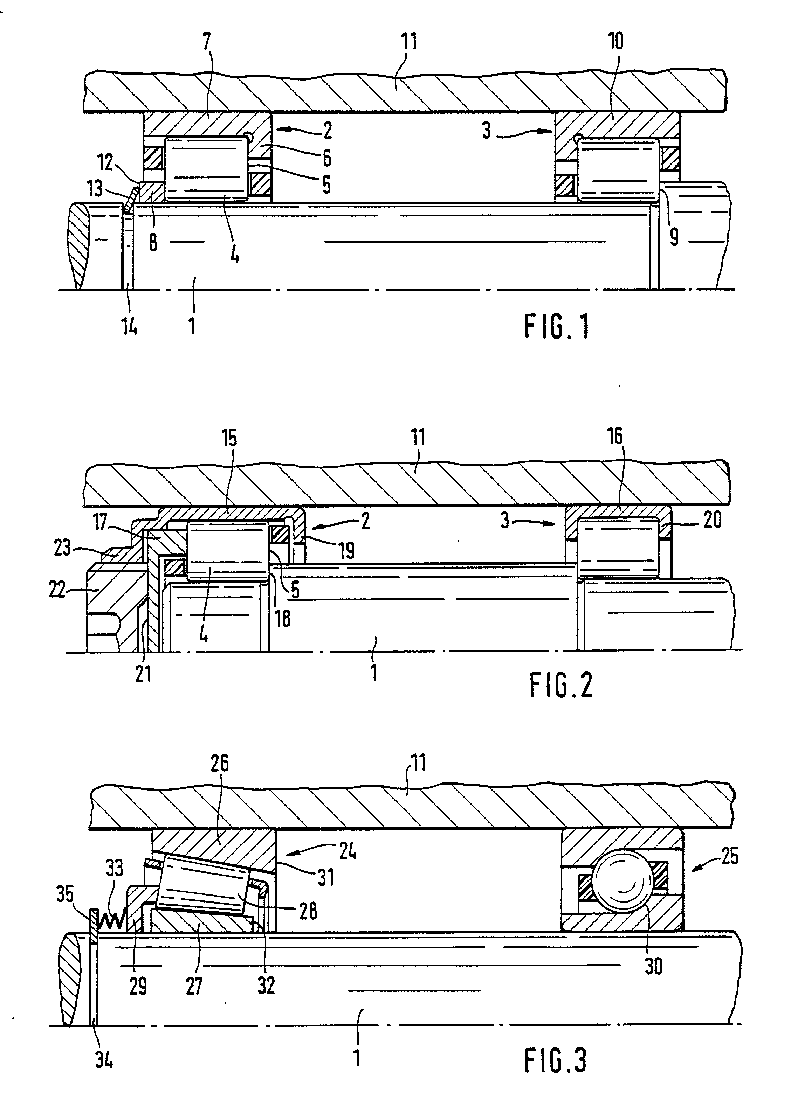

Die Figuren 1 und 2 zeigen die Lagerung einer Welle 1 in einem Rollenlager 2 und einem Axialkräfte aufnehmenden Gegenlager 3, wobei das Rollenlager Rollen 4 mit planen Stirnflächen 5 aufweist, die am Bord 6 bzw. 17 eines Außenlaufringes 7 bzw. 15 und am Bord 8 bzw. 18 der Welle 1 anlaufen. Dabei ist der Bord 6 bzw. 17 am einen Ende am Außenlaufring 7 bzw. 15 und der Bord 8 bzw. 18 am anderen Ende an der Welle 1 angeordnet. Im Gegenlager 3 sind diesen Borden 8 bzw. 17 entgegengerichtete Anlaufflächen 9 bzw. 20 vorgesehen.

Beim Ausführungsbeispiel nach Figur 1 ist der Außenlaufring 7 des Rollenlagers 2 und der Außenlaufring 10 des Gegenlagers 3 massiv ausgebildet, wobei beide Außenlaufringe 7 bzw. 10 axial unverschieblich in ein angedeutetes Gehäuse 11 eingepreßt sind. In diesem Falle ist der Bord 6 am einen Ende des Außenlaufringes 7 fest, während der an dem anderen Ende an der Welle 1 angeordnete Bord 8 gegenüber dem Außenlaufring 7 zu den Rollen 4 hin axial verschieblich gelagert ist. Der Bord 8 weist eine vom Lageräußeren her zugängliche Angriffsfläche 12 für ein Stellglied auf, das hier als Tellerfeder 13 ausgebildet ist, die sich andererseits in einer Nut 14 der Welle 1 abstützt.

Gemäß Figur 2 ist der in das Gehäuse 11 axial unverschieblich eingepreßte Außenlaufring 15 des Rollenlagers 2 und der Außenlaufring 16 des Gegenlagers 3 spanlos gefertigt, wobei der gegenüber dem Außenlaufring 15 zu den Rollen 4 hin axial verschieblich gelagerte Bord 17 am einen Ende am Außenlaufring 15 angeordnet ist, während der am anderen Ende befindliche Bord 18 von einer Schulter der Welle 1 gebildet wird.

Der Außenlaufring 15 weist hier zur Bildung einer Baueinheit einen dem axial verschieblich gelagerten Bord 17 gegenüberliegenden Bord 19 auf, der jedoch keine Anlauffläche bildet. Als Anlauffläche ist im Gegenlager 3 der Bord 20 vorgesehen.

Der axial verschieblich gelagerte Bord 17 weist ebenfalls eine vom Lageräußeren her zugängliche Angriffsfläche 21 auf, an der ein Stellglied in Form einer Schraube 22 angreift, deren Außengewinde in ein Innengewinde des Laufringfortsatzes 23 eingreift.

Figur 3 zeigt die Lagerung einer Welle 1 in einem Kegelrollenlager 24 und einem einseitig Axialkräfte aufnehmenden Gegenlager in Form eines Schrägschulterkugellagers 25, wobei das Kegelrollenlager 24 aus einem Außenlaufring 26 und einem Innenlaufring 27 mit zwischen diesen angeordneten Kegelrollen 28 besteht.

Beim gezeigten Ausführungsbeispiel weist der Innenlaufring 27 an seinem dem größeren Rollendurchmesser zugeordneten Ende einen Bord 29 auf, dem im Gegenlager 25 eine entgegengerichtete Anlauffläche 30 zugeordnet ist. Sowohl der Außenlaufring 26 als auch der Innenlaufring 27 sind an ihren dem kleineren Rollendurchmesser zugeordneten Enden 31 bzw. 32 bordlos ausgeführt.

Der dem Innenlaufring 27 zugeordnete Bord 29 des Kegelrollenlagers 24 ist gegenüber diesem zu den Kegelrollen 28 hin axial verschieblich gelagert. An dem Bord 29 greift ein axial wirkendes Stellglied in Form einer Feder 33 an, die sich andererseits an einem in eine Nut 34 der Welle 1 eingesetzten Sprengring 35 abstützt.

**Ansprüche**

1. Lagerung einer Welle in einem Rollenlager und einem wenigstens einseitig Axialkräfte aufnehmenden Gegenlager, wobei das Rollenlager Rollen mit planen Stirnflächen aufweist, die an Borden eines Außenlaufringes und eines inneren Laufbahnteils anlaufen, wobei die Borde am einen Ende des Außenlaufringes und am anderen Ende am inneren Laufbahnteil angeordnet sind und im Gegenlager diesen Borden entgegengerichtete Anlaufflächen vorgesehen sind, **dadurch gekennzeichnet, daß** ein Bord (8, 17) des Rollenlagers (2) gegenüber dem Außenlaufring (7, 15) oder dem inneren Laufbahnteil (1) zu den Rollen (4) hin axial verschieblich gelagert ist und eine vom Lageräußeren her zugängliche Angriffsfläche (12, 21) für ein Stellglied (13, 22) aufweist.

2. Lagerung einer Welle in einem Kegelrollenlager und einem wenigstens einseitig Axialkräfte aufnehmenden Gegenlager, wobei das Kegelrollenlager aus einem Außenlaufring und einem Innenlaufring mit zwischen diesen angeordneten Kegelrollen besteht, und wobei mindestens einer der Laufringe an seinem dem größeren Rollendurchmesser zugeordneten Ende einen Bord aufweist und im Gegenlager diesem Bord entgegengerichtete Anlaufflächen vorgesehen sind, während die beiden Laufringe an ihren dem kleineren Rollendurchmesser zugeordneten Enden bordlos ausgeführt sind, **dadurch gekennzeichnet, daß** der Bord (29) des Kegelrollenlagers (24) gegenüber seinem Laufring (27) zu den Kegelrollen (28) hin axial verschieblich gelagert ist und eine vom Lageräußeren her zugängliche Angriffsfläche für ein Stellglied (33) aufweist.

3. Lagerung nach Anspruch 1 oder 2, **dadurch gekennzeichnet, daß** an dem axial verschieblich gelagerten Bord (8, 17, 29) ein Stellglied (13, 22, 33) angreift, das sich andererseits an dem zugehörigen Bauteil (Außenlaufring (15) oder inneres Laufbahnteil (1) bzw. Innenlaufring) abstützt.

4. Lagerung nach einem der vorhergehenden Ansprüche, **dadurch gekennzeichnet, daß** das Stellglied von einem Federelement, vorzugsweise einer Tellerfeder (13) gebildet ist.

5. Lagerung nach einem der vorhergehenden Ansprüche, **dadurch gekennzeichnet, daß** das Stellglied als Schraube (22) ausgebildet ist, die mit einem Außengewinde in ein Innengewinde des Außenlaufringes (15) eingreift.

FIG.1

FIG.2

FIG.3